(19) Europäisches Patentamt / European Patent Office / Office européen des brevets

(11) **EP 1 950 901 A1**

(12) **EUROPEAN PATENT APPLICATION**

(43) Date of publication:
**30.07.2008 Bulletin 2008/31**

(51) Int Cl.:
**H04L 1/00** (2006.01)

(21) Application number: **08001251.1**

(22) Date of filing: **23.01.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventor: **Jen, Yu-Chih**<br>**Taipei City (TW)** |
| (30) Priority: **23.01.2007 US 886292 P** | (74) Representative: **Hager, Thomas Johannes**<br>**Hoefer & Partner**<br>**Patentanwälte**<br>**Pilgersheimer Strasse 20**<br>**81543 München (DE)** |
| (71) Applicant: **Innovative Sonic Limited**<br>**Tortola (VG)** | |

(54) **Method of enhancing information security in a wireless communications system and related apparatus**

(57)   A method for enhancing information security in a wireless communications system comprises receiving a data or control bit sequence and a user identity sequence (302), performing a CRC operation on the data/control bit sequence to generate a CRC bit sequence (304), and masking the CRC bit sequence with the user identity sequence to generate a coded bit sequence according to a formula (306). The formula comprises a first equation and a second equation, and the second equation calculates a plurality of coded bits of the coded bit sequence according to most significant bits or least significant bits of the user identity sequence and the CRC bit sequence (306).

FIG. 3

**Description**

This application claims the benefit of U.S. Provisional Application No. 60/886,292, filed on Jan. 23, 2007 and entitled "Method and Apparatus to realize Continuous Packet Connectivity and improve discontinuous transmission and reception ", the contents of which are incorporated herein by reference.

The present invention relates to a method of enhancing information security in a wireless communications system and related apparatus according to the pre-characterizing clauses of claims 1 and 3.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting at the third generation mobile telecommunication technology, the prior art provides High Speed Package Access (HSPA) technology, which includes High Speed Downlink Package Access (HSDPA) and High Speed Uplink Package Access (HSUPA), to increase bandwidth utility rate and package data processing efficiency to improve uplink/downlink transmission rate. For HSDPA and HSUPA, the 3rd Generation Partnership Project (3GPP) provides a Continuous Packet Connectivity (CPC) protocol specification, which includes features that, for user equipments (UEs) in CELL_DCH state, aim to significantly increase the number of packet data users for a cell, reduce the uplink noise rise and improve the achievable download capacity for VoIP.

For an HSDPA UE, physical channels include a high speed physical downlink shared channel (HS-PDSCH), for transferring payload data, and a high speed physical control channel (HS-DPCCH) for uploading an acknowledgement/negative acknowledgement (ACK/NACK) and a channel quality identifier (CQI). As for the media access control (MAC) layer of the HSDPA UE, a MAC-hs entity utilizes a transport channel of High Speed Downlink Shared Channel (HS-DSCH) for receiving data from the physical layer. In addition, a shared control channel for HS-DSCH (HS-SCCH) is used as a physical downlink channel, responsible for transmission of control signals corresponding to HS-DSCH, such as demodulation information.

Via HS-SCCH, the MAC-hs entity can transmit control signalings corresponding to HS-DSCH. To support FDD MIMO (Frequency Division Duplexing Multi-input Multi-output) Service, the prior art provides Coding for HS-SCCH type M, which is used when the UE is configured in MIMO mode. In Coding for HS-SCCH type M, CRC (Cyclic Redundancy Check) attachment is performed as follows:

If one transport block is transmitted on the associated HS-PDSCH(s), a 16-bit CRC is calculated to transform a data bit sequence $[x_{1,1}, x_{1,2}, ..., x_{1,12} x_{2,1}, x_{2,2}, ..., x_{2,14}]$ into a CRC bit sequence $[c_1, c_2, ..., c_{16}]$. To enhance information security, the CRC bit sequence $[c_1, c_2, ..., c_{16}]$ is then masked with the UE Identity sequence $[x_{ue,1}, x_{ue,2}, ..., x_{ue,16}]$, and then appended to the data bit sequence $[x_{1,1}, x_{1,2}, ..., x_{1,12} x_{2,1}, x_{2,2}, ..., x_{2,14}]$, to form the coded bit sequence $[y_1, y_2, ... , y_{30}]$, where

$$y_i = x_{2,i}, \ i=1,2,...,14$$
$$y_i = (c_{i-13} + x_{ue,i-14}) \bmod 2, \ i=15,16,...,30 \ \text{---------(Eq. 1)}$$

In Eq. 1, $y_i = (c_{i-13} + x_{ue,i-14}) \bmod 2$ when i $i=15{\sim}30$. That is, Eq. 1 dose not calculate $y_i$ by both least significant bits or most significant bits, which may cause software error, and corresponding UEs will not be able to decode the received data successfully during most of time if the channel quality is good in general.

This in mind, the present invention aims at providing a method of enhancing information security in a wireless communications system and related apparatus, for enhancing information security, and avoiding system malfunction.

This is achieved by a method of enhancing information security in a wireless communications system and related apparatus according to claims 1 and 3. The dependent claims pertain to corresponding further developments and improvements.

As will be seen more clearly from the detailed description following below, the claimed method for enhancing information security in a wireless communications system comprises receiving a data or control bit sequence and a user identity sequence, performing a CRC operation on the data/control bit sequence to generate a CRC bit sequence, and masking the CRC bit sequence with the user identity sequence to generate a coded bit sequence according to a formula. The formula comprises a first equation and a second equation, and the second equation calculates a plurality of coded bits of the coded bit sequence according to most significant bits or least significant bits of the user identity sequence and the CRC bit sequence.

In the following, the invention is further illustrated by way of example, taking reference to the accompanying drawings. Thereof

Fig. 1 is a functional block diagram of a communications device.
Fig. 2 is a diagram of the program code shown in Fig. 1.
Fig. 3 is a flowchart diagram of a process according to an embodiment of the present invention.

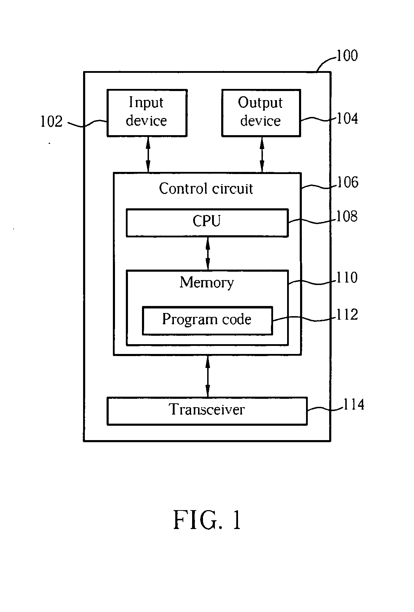

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a High Speed Package Access (HSPA) system of the third generation (3G) mobile communications system, supporting Continuous Packet Connectivity (CPC), and can be user or network equipment.

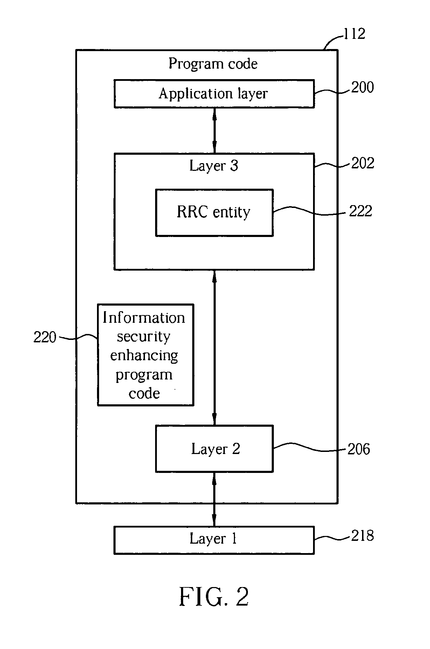

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 includes a radio resource control (RRC) entity 222, which is used for controlling the Layer 1 218 and the Layer 2 206 and performing peer-to-peer RRC communication with other communications devices, such as a Node-B or a UTRAN. In addition, the RRC entity 222 can change an RRC state of the communications device 100, switching between an Idle mode, CELL_PCH, URA_PCH, CELL_FACH or CELL_DCH state.

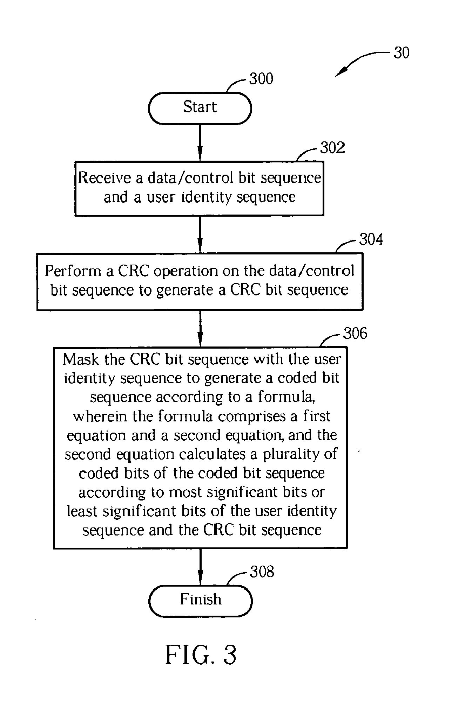

As mentioned above, for HSDPA, the MAC layer (or the Layer 2 206) can transmit control signalings corresponding to HS-DSCH via HS-SCCH. To support FDD MIMO services, the program code 112 can perform CRC on HS-DSCH. In such a situation, the embodiment of the present invention provides an information security enhancing program code 220, to enhance information security and avoid system malfunction. Note that, although the information security enhancing program code 220 is implemented in the Layer 2 206 in Fig. 2, it could also be implemented in the Layer 1 218. Whether the information security enhancing program code 220 is implemented in the Layer 2 206 or the Layer 1 218 is not relevant to the present invention. Please refer to Fig. 3, which illustrates a schematic diagram of a process 30. The process 30 is utilized for enhancing information security in a wireless communications system, and can be compiled into the information security enhancing program code 220. The process 30 comprises the following steps:

Step 300: Start.
Step 302: Receive a data/control bit sequence and a user identity sequence.
Step 304: Perform a CRC operation on the data/control bit sequence to generate a CRC bit sequence.
Step 306: Mask the CRC bit sequence with the user identity sequence to generate a coded bit sequence according to a formula, wherein the formula comprises a first equation and a second equation, and the second equation calculates a plurality of coded bits of the coded bit sequence according to most significant bits or least significant bits of the user identity sequence and the CRC bit sequence.
Step 308: Finish.

According to the process 30, in the second equation, the embodiment of the present invention calculates each coded bits of the coded bit sequence according to the most significant bits or least significant bits of the user identity sequence and the CRC bit sequence. For example, suppose that the data/control bit sequence is $[x_{1,1}, x_{1,2}, ..., x_{1,12}, x_{2,1}, x_{2,2}, ..., x_{2,14}]$, the CRC bit sequence is $[c_1, c_2, ..., c_{16}]$, and the user identity sequence is $[x_{ue,1}, x_{ue,2}, ..., x_{ue,16}]$, then according to the embodiment of the present invention, the coded bit sequence $[y_1, y_2, ..., y_{30}]$ is:

$$y_i = x_{2,i}, i=1,2,...,14 \text{ ---------(Eq. 2)}$$

$$y_i = (c_{i-14} + x_{ue,i-14}) \bmod 2, i=15,16,...,30 \text{ ---------(Eq. 3)}$$

where Eq. 2 represents the first equation, while Eq. 3 represents the second equation.

Comparing Eq. 1 and Eq. 3, the embodiment of the present invention calculates $y_i$ by both least significant bits or most significant bits of $c_{i-14}$ and $x_{ue,i-14}$ when $i=15,16,...,30,$ so that corresponding UEs can decode the received data successfully, to prevent system malfunction.

In summary, the embodiment of the present invention can calculate coded bits of the coded bit sequence according to the most significant bits or least significant bits of the user identity sequence and the CRC bit sequence, to enhance information security, and avoid system malfunction.

**Claims**

1. A method for enhancing information security in a wireless communications system comprising:

   receiving a data or control bit sequence and a user identity sequence (302);
   performing a Cyclic Redundancy Check, called CRC hereinafter, operation on the data or control bit sequence to generate a CRC bit sequence (304); and
   masking the CRC bit sequence with the user identity sequence to generate a coded bit sequence according to a formula (306);

   **characterized by** the formula comprising a first equation and a second equation, and the second equation calculates a plurality of coded bits of the coded bit sequence according to most significant bits or least significant bits of the user identity sequence and the CRC bit sequence (306).

2. The method of claim 1, **characterized in that** the data or control bit sequence is $[X_{1,15}, x_{1,2}, ..., x_{1,12}, x_{2,1}, x_{2,2}, ..., x_{2,14}]$, the CRC bit sequence is $[c_1, c_2, ..., c_{16}]$, the user identity sequence is $[x_{ue,1}, x_{ue,2}, ..., x_{ue,16}]$, the first equation is

$$y_i = x_{2,i},\ i=1,2,...,14;$$

   and
   the second equation is

$$y_i = (c_{i\text{-}14} + x_{ue,i\text{-}14}) \bmod 2,\ i=15,16,...,30,$$

   wherein "$y_i$" is a coded bit of coded bit sequence, and "mod" is modulus operation.

3. A communications device (100) for enhancing information security in a wireless communications system comprising:

   a control circuit (106) for realizing functions of the communications device (100);
   a processor (108) installed in the control circuit (106), for executing a program code (112) to command the control circuit (106); and
   a memory (110) installed in the control circuit (106) and coupled to the processor (108) for storing the program code (112);

   wherein the program code (112) comprises:

   receiving a data or control bit sequence and a user identity sequence (302);
   performing a Cyclic Redundancy Check, called CRC hereinafter, operation on the data or control bit sequence to generate a CRC bit sequence (304); and
   masking the CRC bit sequence with the user identity sequence to generate a coded bit sequence according to a formula (306);

   **characterized by** the formula comprising a first equation and a second equation, and the second equation calculates a plurality of coded bits of the coded bit sequence according to most significant bits or least significant bits of the user identity sequence and the CRC bit sequence (306).

4. The communications device of claim 3, **characterized in that** the data or control bit sequence is $[x_{1,1}, x_{1,2}, ..., x_{1,12},$

$x_{2,1}$, $x_{2,2}$, ..., $x_{2,14}$], the CRC bit sequence is [$c_1$, $c_2$, ..., $c_{16}$], the user identity sequence is [$x_{ue,1}$, $x_{ue,2}$, ..., $x_{ue,16}$], the first equation is

$$y_i = x_{2,i}, i=1,2,...,14;$$

and
the second equation is

$$y_i = (c_{i-14} + x_{ue,i-14}) \bmod 2, i=15,16,...,30,$$

wherein "$y_i$" is a coded bit of coded bit sequence, and "mod" is modulus operation.

FIG. 1

FIG. 2

FIG. 3

**EUROPEAN SEARCH REPORT**

Application Number

EP 08 00 1251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Multiplexing and channel coding (TDD), 3GPP TS 25.222 version 5.0.0 (Release 5)" 3GPP TS 25.222 V5.0.0, XX, XX, 1 March 2002 (2002-03-01), pages 54-56, XP002256032 * section 4.6.2 * | 1-4 | INV. H04L1/00 |
| X | SIEMENS: "Change Request R1-02-0605, Rate Matching and Channel Coding for HS-SCCH" 3GPP TSG-RAN1 MEETING #25, XX, XX, 9 April 2002 (2002-04-09), pages 1-5, XP002256033 * section 4.6.4 * | 1-4 | |

TECHNICAL FIELDS
SEARCHED (IPC)

H04L

The present search report has been drawn up for all claims

| Place of search | Date of completion of the search | Examiner |
|---|---|---|
| Munich | 26 May 2008 | Stolte, Norbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 950 901 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 88629207 P